# EUROPÄISCHE PATENTSCHRIFT

(11) **EP 2 913 027 B1**
(45) Veröffentlichungstag und Bekanntmachung des Hinweises auf die Patenterteilung: **06.07.2016**
(21) Anmeldenummer: 15161316.3
(22) Anmeldetag: 29.05.2009
(51) Int. Cl.: A61C 19/10

(54) **DENTALER FARBSCHLÜSSEL**
DENTAL COLOUR KEY
CLÉ DE COULEUR DENTAIRE

(43) Veröffentlichungstag der Anmeldung: 02.09.2015
(62) Teilanmeldung aus: 09161608.6
(73) Patentinhaber: Ivoclar Vivadent AG, 9494 Schaan (LI)
(72) Erfinder: Rohner, Gottfried, 9450 Altstätten (CH); Brotzge, Michael, 6842 Koblach (AT); Bertsch, Diethard, verstorben (AT)
(74) Vertreter: Baronetzky, Klaus

(56) Entgegenhaltungen:
- US-A- 3 405 446
- US-A1- 2003 124 481
- US-A1- 2005 260 535
- US-A1- 2007 009 855

## Beschreibung

Die Erfindung betrifft einen dentalen Farbschlüssel, gemäß dem Oberbegriff von Anspruch 1.

Derartige dentale Farbschlüssel sind seit langem bekannt, wobei als Beispiel hierfür der Farbschlüssel gemäß der DE-U-83 29 441 dienen mag. Bei einem solchen Farbschlüssel werden mindestens zwei Farbmuster mit unterschiedlichen Zahnfarben verwendet und neben einen Nachbarzahn des zu restaurierenden Zahns gehalten. Jedes Farbmuster weist typischerweise etwa die Fläche eines Zahns auf, und häufig auch eine zahnähnliche Krümmung der Oberfläche.

Etwas neuere Beispiele für derartige dentale Farbschlüssel sind die aus der DE 1 95 09 830 C2 und der EP 1 002 504 A2 bekannten Lösungen. Diese Lösungen stellen zwar Verbesserungen dar, nachdem die Handhabbarkeit einzelner Farbmuster und damit die Möglichkeit für den Zahnarzt, ein Farbmuster im Verhältnis zu einem natürlichen Zahn beurteilen zu können, verbessert ist. Jedoch hängt das Vergleichsergebnis recht stark vom subjektiven Empfinden des Zahnarztes ab, aber auch beispielsweise davon, wie die Belichtungsverhältnisse sind, gerade dann, wenn ein Farbmuster des Farbschlüssels neben einem Zahn gehalten wird.

Gerade die als erwünscht angesehene Krümmung von Farbmustern erfordert eine ausgeprägt dreidimensionale Gestaltung der Farbmuster, so dass ein Farbstäbchen deutlich vorspringt, auch wenn es neben einen Zahn gehalten wird. Dies bedingt bereits unterschiedliche Lichtverhältnisse, da dann Farbmuster und Zahn nie auf der gleichen optischen Ebene liegen.

Um menschliche Einflüsse bei der Beurteilung auszuschließen, ist es vorgeschlagen worden, eine vorhandene Zahnfarbe mit einer Dentalkamera zu erfassen und elektronisch die geeignete Zahnfarbe wie A2, A3 usw. auszuwählen. Für eine derartige Lösung müssen jedoch aufwendige Kalibrierungsschritte vorgenommen werden, und eine elektronische Farberfassungsvorrichtung kommt eher bei größeren Zahnarztpraxen in Frage.

Die bekannten Farbschlüssel weisen rein aus räumlichen Gründen typischerweise lediglich die gängigsten Zahnfarben auf, zu denen beispielsweise keine Bleachfarben und erst recht keine Zahnfleischfarben gehören.

Demgegenüber liegt der Erfindung die Aufgabe zugrunde, einen dentalen Farbschlüssel gemäß dem Oberbegriff von Anspruch 1 zu schaffen, der hinsichtlich der Farbvergleichbarkeit optimiert ist, aber dennoch preisgünstig herzustellen ist und dennoch die Möglichkeit zur Abdeckung eines vergleichsweise großen Spektrums bietet.

Diese Aufgabe wird erfindungsgemäß durch Anspruch 1 gelöst. Vorteilhafte Weiterbildungen ergeben sich aus den Unteransprüchen.

Der erfindungsgemäße dentale Farbschlüssel zeichnet sich dadurch aus, dass er eine Mehrzahl, insbesondere eine Vielzahl von Farbmustern aufweist und insbesondere im Umfangsbereich eines einzigen, farblich zu bestimmenden ineinander benachbarten Zahns anordbar ist. Auf diese Weise können die neben dem Farbschlüssel liegenden Bereiche des Zahns bereits zu Vergleichszwecken herangezogen werden.

Durch die enge Nachbarschaft einer Mehrzahl von Farbmustern mit dem Zahn lässt sich die Vergleichbarkeit deutlich verbessern, denn durch den unmittelbaren Vergleich ist die Vergleichbarkeit wesentlich besser gegeben, als wenn aus der Erinnerung heraus verschiedene Farbstäbchen nacheinander an einen Zahn angelegt werden.

Nachdem die Farbmuster ausgesprochen klein sind, können sie auch nahe an der Oberfläche des zu bestimmenden Zahns angebracht sein. Das Vorsprungmaß ist nicht nennenswert, so dass davon ausgegangen werden kann, dass die Farbmuster im Wesentlichen in der gleichen Ebene wie die Oberfläche des entsprechenden Zahns angeordnet sind.

Erfindungsgemäß bevorzugt ist es jedoch, den miniaturisierten Farbschlüssel an einem Nebenzahn zu befestigen oder aufzukleben, wobei die Befestigung bevorzugt so gewählt ist, dass sowohl mittlere Bereiche als auch Randbereiche des zu bestimmenden Zahns neben dem miniaturisierten Farbschlüssel sichtbar sind.

Es besteht auch beispielsweise die Möglichkeit, den Farbschlüssel zwischen Zähnen des Unter- und Oberkiefers anzuordnen und ihn für den Farbvergleich mit dem Nachbarzahn zu verwenden. Auch ist es möglich, den erfindungsgemäßen Farbschlüssel mit einer Klammer zu versehen, über welche er an verschiedenen Positionen der Zahnleiste aufsteckbar ist. Bevorzugt ist der erfindungsgemäße Farbschlüssel klein und leicht und weist eine Stärke von weniger als 6 mm, bevorzugt 0,5 mm auf. Die Farbmuster sind bevorzugt in einem Raster, besonders bevorzugt in einer Matrix angeordnet, so dass eine leichtere Zuordnung möglich ist.

Dies gilt auch, wenn zusätzlich an einander gegenüber liegenden Seitenkanten des Farbschlüssels Sonderfarben wie Blechfarben oder Zahnfleischfarben vorgesehen sind.

Der Standard-Farbschlüssel weist vorzugsweise vier insbesonders 16 Farbmuster auf, neben denen bei Bedarf Leisten mit Bleachfarben und Zahnfleischfarben angebracht sind.

In vorteilhafter Ausgestaltung des erfindungsgemäßen Farbschlüssels ist es vorgesehen, dass der Farbschlüssel eine Fläche einnimmt, die kleiner als eine vestibuläre Fläche eines Zahns ist. Dies gilt in besonderem Maße für Schneidezähne, also die labiale Fläche von Schneidezähnen.

Auch wenn bevorzugt 16 verschiedene Farbmuster in einem Farbschlüssel realisiert sind, versteht es sich, dass in modifizierter Ausgestaltung auch eine beliebige andere Anzahl von Farbmustern realisierbar ist. Dies gilt insbesondere dann, wenn die Farbmuster nicht diskret angeordnet sind, sondern kontinuierlich ineinander verlaufen. Grundsätzlich ist es auch möglich, in der Mitte des Farbschlüssels eine Ausnehmung zu belassen, durch die hindurch die vestibuläre Fläche sichtbar ist, um so den "Randabstand" gering zu halten.

Die Farbmuster des Farbschlüssels sind bevorzugt in dichter Packung nebeneinander und übereinander an einem einzigen Zahn angebracht. Auch hierdurch wird die Vergleichbarkeit aufgrund der engen Abstände besonders gut. Alternativ können auch Trennlinien, insbesondere Trennstege, vorgesehen sein, die eine optische Trennung der einzelnen Farbmuster erlauben die entweder kontinuierlich ineinander verlaufen oder diskret voreinander benachbart sind.

Die Farbmuster des Farbschlüssels können in beliebiger geeigneter Weise realisiert sein und beispielsweise auch mit einem Opaker und/oder Dentinmaterial hinterlegt sein.

Erfindungsgemäß besonders günstig ist es, dass der Farbschlüssel eine Fläche einnimmt, die kleiner als eine bukkale und/oder labiale Fläche eines Zahnes ist.

Erfindungsgemäß besonders günstig ist es, dass der Farbschlüssel wenigstens vier insbesondere sechzehn verschiedene, bekannte, dentale Farbmuster aufweist.

Erfindungsgemäß besonders günstig ist es, dass die Farbmuster des Farbschlüssels aus entsprechend der Zahnfarbe eingefärbtem Restaurationsmaterial aufgebaut sind.

Erfindungsgemäß besonders günstig ist es, dass die Farbmuster des Farbschlüssels unterschiedlichen Farbtönen und Opazitäten.

Erfindungsgemäß besonders günstig ist es, dass die Farbmuster des Farbschlüssels ähnliche Zahnfarben eines Farbtons entsprechen.

Erfindungsgemäß besonders günstig ist es, dass der Farbschlüssel wenigstens ein Farbmuster aufweist, das einer Bleachfarbe und/oder einer Zahnfleischfarbe entspricht.

Erfindungsgemäß besonders günstig ist es, dass der Farbschlüssel im Umfangsbereich eines zu analysierenden Zahnes anordbar oder lösbar befestigt ist.

Erfindungsgemäß besonders günstig ist es, dass der Farbschlüssel Teil eines Abstandhalters ist, der insbesondere mit einer Kamera zusammen wirkt.

Erfindungsgemäß besonders günstig ist es, dass sich der Farbschlüssel und die bukkale und/oder labiale Fläche des zu analysierenden Zahnes im Wesentlichen in der gleichen Ebene erstrecken.

Erfindungsgemäß besonders günstig ist es, dass der Farbschlüssel auf wenigstens einem Zahn oder zwischen wenigstens zwei Zähnen des Oberkiefers und Unterkiefers - insbesondere mechanisch oder adhäsiv - lösbar befestigt ist.

Erfindungsgemäß besonders günstig ist es, dass der Farbschlüssel eine Dicke von 0,01 mm bis 6 mm aufweist und insbesondere in Form einer bedruckten Folie ausgebildet ist.

Erfindungsgemäß besonders günstig ist es, dass der Farbschlüssel in Form einer bedruckten Folie ausgebildet ist.

Erfindungsgemäß besonders günstig ist es, dass die Folie mit einem Adhäsiv versehen ist, das rückstandsfrei von einer Zahnoberfläche lösbar ist.

Erfindungsgemäß besonders günstig ist es, dass zumindest die Farbmuster wenigstens teilweise aus Keramik hergestellt sind.

Erfindungsgemäß besonders günstig ist es, dass zumindest die Farbmuster wenigstens teilweise aus einem dentalen Composit-Material hergestellt sind.

Erfindungsgemäß besonders günstig ist es, dass die Farbmuster kontinuierlich ineinander verlaufen.

Erfindungsgemäß besonders günstig ist es, dass die Farbmuster nicht kontinuierlich ineinander verlaufen, sondern diskret dargestellt sind.

Weitere Vorteile, Einzelheiten und Merkmale ergeben sich aus der nachfolgenden Beschreibung mehrerer Ausführungsbeispiele eines erfindungsgemäßen dentalen Farbschlüssels anhand der Zeichnung.

Es zeigen:
- Fig. 1: eine perspektivischen Ansicht einer Ausführungsform eines erfindungsgemäßen dentalen Farbschlüssels in schematischer Darstellung;
- Fig. 2: eine weitere Ausführungsform eines erfindungsgemäßen dentalen Farbschlüssels in Draufsicht;
- Fig. 3: eine Draufsicht auf einen erfindungsgemäßen dentalen Farbschlüssel nach Anbringung auf einem Zahn;
- Fig. 4: eine Draufsicht auf eine weitere Ausführungsform eines erfindungsgemäßen dentalen Farbschlüssels nach Anbringung auf einem Zahn;
- Fig. 5: eine modifizierte Anordnung eines erfindungsgemäßen dentalen Farbschlüssels;
- Fig. 6: ein dentaler Farbschlüssel in einer weiteren Ausführungsform als Plättchen;
- Fig. 7: eine mehrfache Anordnung von dentalen Farbschlüsseln, die wie folienartig ausgebildet und auf einer Rolle aufgewickelt sind;
- Fig. 8: ein dentaler Farbschlüssel gemäß Fig. 6 von der Rückseite mit einem Befestigungsclip;
- Fig. 9: eine andere Befestigungsvorrichtung für einen dentalen Farbschlüssel; und
- Fig. 10: eine Zahnfarben-Analysevorrichtung zur Verwendung mit einem erfindungsgemäßem dentalen Farbschlüssel.

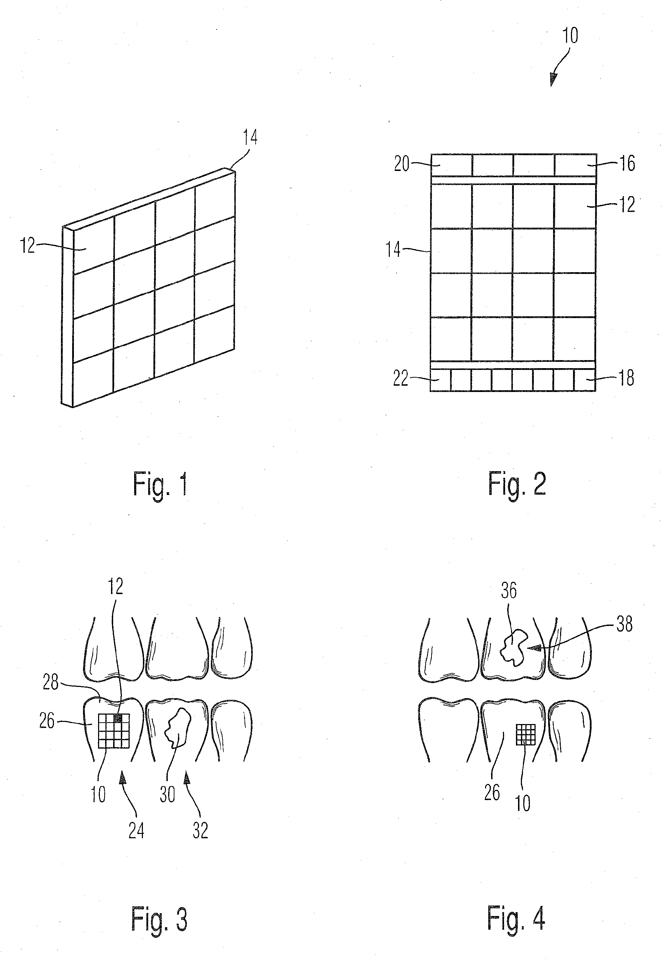

Der in Fig. 1 dargestellte erfindungemäße dentale Farbschlüssel 10 weist eine Vielzahl, nämlich 16, Farbmuster 12 auf, die nach der Art einer Matrix angeordnet sind. Jedes Farbmuster entspricht einer handelsüblichen Zahnfarbe wie A2, A3, A4 usw. und bevorzugt sind einander ähnliche Zahnfarben benachbart angeordnet.

Die Farbmuster 12 sind auf dem plättchenförmigen Farbschlüssel fest angebracht. Der Farbschlüssel weist hierzu einen dünnen Grundkörper 14 auf, der dafür geeignet ist, auf einem Zahn befestigt zu werden, und zwar auf dessen vestibulärer Fläche. Die Befestigung kann entweder mit einem Klebstoff erfolgen, der den Grundkörper 14 in einer Weise festhält, dass er sich mindestens bei leichtem Anstoßen mit der Zunge nicht löst, oder mit einer Klammer, die den Zahn, bevorzugt einen Schneidezahn, übergreift und hierdurch die erwünschte Klemmwirkung bereitstellt.

Es ist auch möglich, den Grundkörper etwas biegsam zu gestalten, so dass er sich besser der ganz leicht gewölbten Oberfläche des Schneidezahns anpassen kann. Bevorzugt ist der Grundkörper deutlich kleiner als ein Zahn, beispielsweise halb so breit, und signifikant dünner, beispielsweise mehr als eine Zehnerpotenz. Hierdurch liegt der erfindungsgemäße Farbschlüssel 10 flächig auf dem Zahn auf, und es ist möglich, einen unmittelbaren Vergleich zwischen dem Farbmuster 12 und dem Zahn zu ermöglichen. Hierzu verbleiben ausreichende freie Bereiche der vestibulären Fläche des Zahns, wobei es sich versteht, dass auch ohne Weiteres ein Nachbarzahn mit dem erfindungsgemäßen Farbschlüssel 10 vergleichbar ist.

Aus Fig. 3 ist ersichtlich, in welcher Weise ein erfindungsgemäßer Farbschlüssel 10 auf einem Zahn 24 angebracht sein kann. In dem dargestellten Ausführungsbeispiel ist der Farbschlüssel 10 mittig auf der vestibulären Fläche 26 des Zahns angebracht, so dass freie Flächen 28 den Zahnschlüssel 10 allseits umgeben.

Durch optischen Vergleich - sei es direkt oder mit Hilfsmitteln - gelingt es, die Übereinstimmung eines Farbmusters 12 mit einer Fläche 30 eines Nachbarzahns 32 zu erfassen, so dass für diese Fläche 30 die Zahnfarbe festliegt und damit erfasst ist.

Besonders günstig ist es, wenn dies bei bei fotografischer Unterstützung mit der gleichen fotografischen Aufnahme realisiert ist, da dann keine Kalibrierung erforderlich ist, sondern die betreffende Zahnfarbe automatisch erfasst wird.

Aus Fig. 4 ist ersichtlich, in welcher Weise ein Farbschlüssel 10 eingesetzt wird, um einen Bereich 36 eines Antagonisten 38 zu erfassen. In der dargestellten Ausführungsform ist der Zahnschlüssel 10 distal an der vestibulären Fläche des Zahns angebracht, so dass an drei Seiten vergleichweise große Freiflächen 26 bestehen, die für die Beurteilung der Zahnfarbe besonders gut geeignet sind.

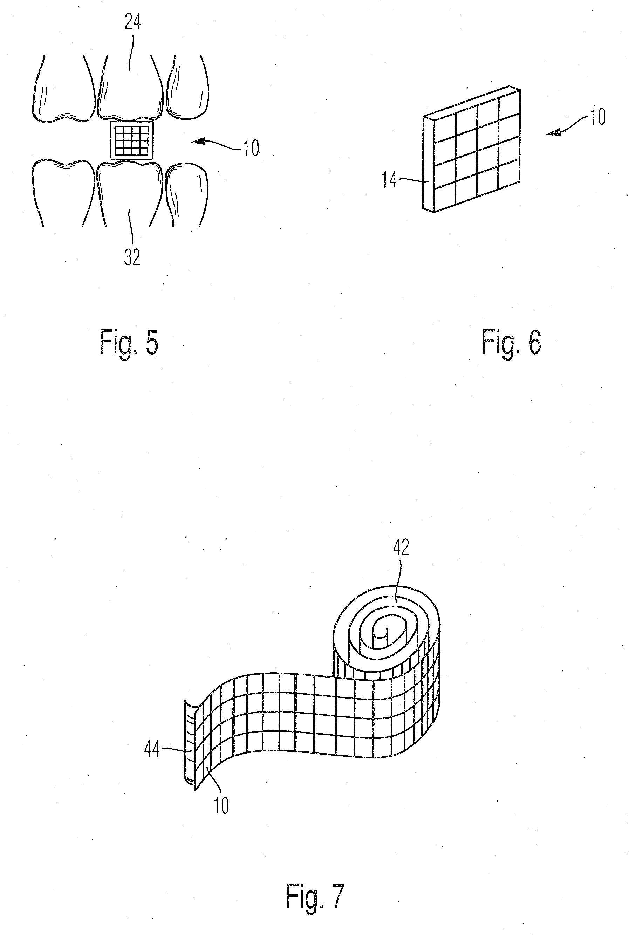

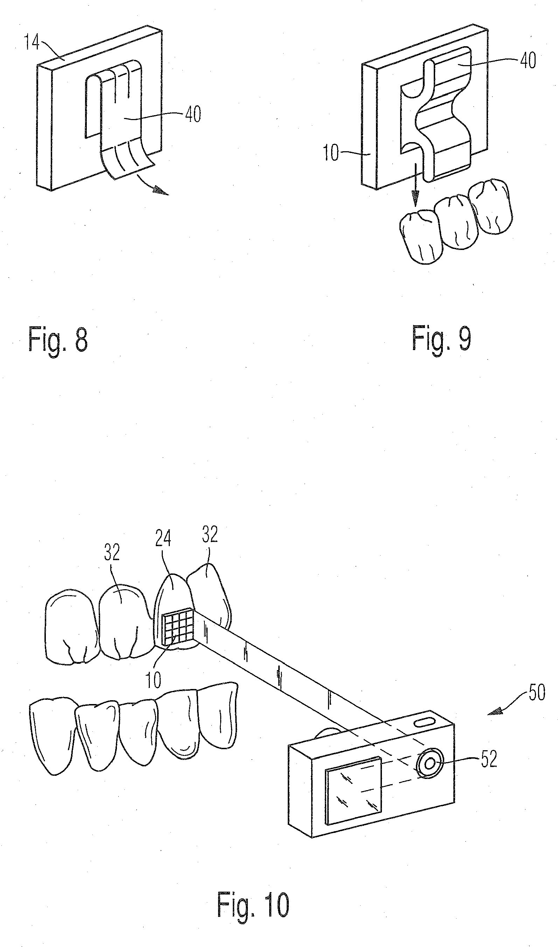

Fig. 5 zeigt eine modifizierte Ausgestaltung eines erfindungsgemäßen dentalen Farbschlüssels 10, die es erlaubt, möglichst gut sowohl einen Unterkieferzahn als auch seinen Oberkieferantagonisten zu beurteilen. Hierzu ist der dentale Farbschlüssel gemäß Fig. 9 sowohl am Unterkiefer als auch am Oberkiefer aufgeklemmt und erlaubt es so, sowohl den Zahn 24 als auch den Zahn 32 in gleicher Weise zu beurteilen.

Fig. 6 zeigt, dass der erfindungsgemäße Zahnschlüssel 10 mit seinem Grundkörper 14 die Form eines dünnen Plättchens haben kann, das gemäß Fig. 8 mit einer an der Rückseite angebrachten Klammer 40 gut auf einen Zahn aufsteckbar und dort aretierbar ist.

Eine modifizierte Ausgestaltung eines erfindungsgemäßen Digitalfarbschlüssels ist aus Fig. 7 ersichtlich. Dort ist der dentale Farbschlüssel 10 auf einer Rolle 42 wie ein Klebeetikett angebracht, und eine gemeinsame Tragefolie 44 ist so ausgestaltet, dass der mit einer Haftoberfläche rückwärtig beschichtete dentaler Farbschlüssel 10 leicht von der Tragefolie 44 trennbar ist.

Aus Fig. 9 ist eine Doppelklammer ersichtlich, die der speziellen Anordnung des dentalen Farbschlüssels gemäß Fig. 5 Rechnung trägt, wobei die Doppelklammer 40 wie ersichtlich sowohl ein Unterkiefer-Schneidezahn als auch einen Oberkiefer-Schneidezahn hintergreifen kann und beide in einem definierten Abstand voneinander hält.

Aus Fig. 10 ist eine Dentalanalysevorrichtung 50 ersichtlich, die über eine Linse 52 mit einem CCD-Sensor ein Bild des dentalen Farbschlüssels 10 zusammen mit dem Zahn 24 und typischerweise auch den Nachbarzähnen 32 aufnimmt und abspeichert.

Hierdurch lässt sich in besonders günstiger Weise eine Kalibrierung der Dentalanalysevorrichtung 50 vermeiden.

## Patentansprüche

1. Dentaler Farbschlüssel mit wenigstens zwei Farbmustern mit unterschiedlichen Zahnfarben, die einander benachbart sind, wobei der Farbschlüssel (10) einen Grundkörper (14) aufweist, der auf einem Zahn befestigbar ist, und auf welchem die Farbmuster (12) fest angebracht sind, wobei die Farbmuster (12) aus Restaurationsmaterial bestehen, und wobei die gesamte Fläche des Farbschlüssels (10) geringer als die bukkale und/oder labiale, also vestibuläre Fläche (26) zweier Zähne ist.

2. Dentaler Farbschlüssel nach einem der vorhergehenden Ansprüche, **dadurch gekennzeichnet, dass** der Farbschlüssel (10) wenigstens vier insbesondere sechzehn verschiedene, bekannte, dentale Farbmuster (12) aufweist.

3. Dentaler Farbschlüssel nach einem der vorhergehenden Ansprüche, **dadurch gekennzeichnet, dass** die dentalen Farbmuster (12) durch Trennlinien, insbesondere Trennstege, voneinander getrennt auf dem Farbschlüssel (10) angebracht sind.

4. Dentaler Farbschlüssel nach einem der vorhergehenden Ansprüche, **dadurch gekennzeichnet, dass** die Farbmuster (12) des Farbschlüssels (10) aus entsprechend der Zahnfarbe eingefärbtem Restaurationsmaterial aufgebaut sind.

5. Dentaler Farbschlüssel nach einem der vorhergehenden Ansprüche, dadurch gekennzeichent, dass die Farbmuster (12) des Farbschlüssels (10) unterschiedlichen Farbtönen und Opazitäten entsprechen.

6. Dentaler Farbschlüssel nach einem der vorhergehenden Ansprüche, **dadurch gekennzeichnet, dass** die Farbmuster (12) des Farbschlüssels (10) ähnlichen Zahnfarben eines Farbtons entsprechen.

7. Dentaler Farbschlüssel nach Anspruch 1 oder 2, **dadurch gekennzeichnet, dass** der Farbschlüssel (10) wenigstens ein Farbmuster (12) aufweist, das einer Bleachfarbe (16) und/oder einer Zahnfleischfarbe entspricht.

8. Dentaler Farbschlüssel nach einem der vorhergehenden Ansprüche, **dadurch gekennzeichnet, dass** der Farbschlüssel (10) im Umfangsbereich eines zu analysierenden Zahnes anordbar oder lösbar befestigbar ist.

9. Dentaler Farbschlüssel nach einem der vorhergehenden Ansprüche, **dadurch gekennzeichnet, dass** der Farbschlüssel (10) Teil eines Abstandhalters ist, der insbesondere mit einer Kamera zusammen wirkt.

10. Dentaler Farbschlüssel nach einem der vorhergehenden Ansprüche, **dadurch gekennzeichnet, dass** sich der Farbschlüssel (10) und die bukkale und/oder labiale Fläche (26) des zu analysierenden Zahnes im Wesentlichen in der gleichen Ebene erstrecken.

11. Dentaler Farbschlüssel nach einem der vorhergehenden Ansprüche, **dadurch gekennzeichnet, dass** der Farbschlüssel auf wenigstens einem Zahn oder zwischen wenigstens zwei Zähnen des Oberkiefers und Unterkiefers - insbesondere mechanisch oder adhäsiv - lösbar befestigt ist.

12. Dentaler Farbschlüssel nach einem der vorhergehenden Ansprüche, **dadurch gekennzeichnet, dass** der Farbschlüssel (10) eine Dicke von 0,01 mm bis 6 mm aufweist und insbesondere in Form einer bedruckten Folie (44) ausgebildet ist, welch Folie (44) besonders bevorzugt mit einem Adhäsiv versehen ist, das rückstandsfrei von einer Zahnoberfläche lösbar ist.

13. Dentaler Farbschlüssel nach einem der vorhergehenden Ansprüche, **dadurch gekennzeichnet, dass** zumindest die Farbmuster (12) wenigstens teilweise aus Keramik und /oder aus einem dentalen Composit-Material hergestellt sind.

14. Dentaler Farbschlüssel nach einem der vorhergehenden Ansprüche, **dadurch gekennzeichnet, dass** die Farbmuster (12) kontinuierlich ineinander verlaufen.

15. Dentaler Farbschlüssel nach den Ansprüchen 1 bis 13 **dadurch gekennzeichnet, dass** die Farbmuster (12) nicht kontinuierlich ineinander verlaufen, sondern diskret dargestellt sind.

## Claims

1. A dental color key comprising at least two color samples with different tooth colors which are adjacent to one another, wherein the color key (10) comprises a base body (14) which may be attached to a tooth and onto which the color samples (12) are disposed fixedly, wherein the color samples (12) consist of restoration material and wherein the entire surface area of the color key (10) is smaller than the buccal and/or labial surface, that is to say the vestibular surface (26) of two teeth.

2. The dental color key as claimed in one of the preceding claims, **characterized in that** the color key (10) comprises at least four, in particular sixteen different known dental color samples (12).

3. The dental color key as claimed in one of the preceding claims, **characterized in that** the dental color samples (12) are attached to the color key (10) separated from one another by parting lines, in particular by parting flanges.

4. The dental color key as claimed in one of the preceding claims, **characterized in that** the color samples (12) of the color key (10) are formed from restoration material which has been dyed in accordance with the tooth color.

5. The dental color key as claimed in one of the preceding claims, **characterized in that** the color samples (12) of the color key (10) correspond to different color shades and opacities.

6. The dental color key as claimed in one of the preceding claims, **characterized in that** the color samples (12) of the color key (10) correspond to similar tooth colors of a color shade.

7. The dental color key as claimed in claim 1 or 2, **characterized in that** the color key (10) comprises at least one color sample (12) corresponding to a bleach color (16) and/or to a gingival color.

8. The dental color key as claimed in one of the preceding claims, **characterized in that** the color key (10) may be arranged or may be releasably mounted in the peripheral region of a tooth that is to be analyzed.

9. The dental color key as claimed in one of the preceding claims, **characterized in that** the color key (10) forms part of a spacer that in particular interacts with a camera.

10. The dental color key as claimed in one of the preceding claims, **characterized in that** the color key (10) and the buccal and/or labial surface area (26) of the tooth that is to be analyzed substantially extend in the same plane.

11. The dental color key as claimed in one of the preceding claims, **characterized in that** the color key is releasably mounted - in particular mechanically or adhesively - on at least one tooth or between at least two teeth of the upper jaw and the lower jaw.

12. The dental color key as claimed in one of the preceding claims, **characterized in that** the color key (10) has a thickness of 0.01 mm to 6 mm, and in particular is formed as a printed film (44), which film (44) is particularly preferably provided with an adhesive that can be removed from a tooth surface in a residue-free manner.

13. The dental color key as claimed in one of the preceding claims, **characterized in that** at least the color samples (12) are at least partially made from a ceramic material and/or a dental composite material.

14. The dental color key as claimed in one of the preceding claims, **characterized in that** the color samples (12) continuously run into one another.

15. The dental color key as claimed in one of the claims 1 to 13, **characterized in that** the color samples (12) do not continuously run into one another but are represented in a discrete manner.

## Revendications

1. Teintier dentaire avec au moins deux échantillons de teintes avec des teintes de dents différentes, qui sont adjacents les unes par rapport aux autres, où le teintier (10) présente un corps de base (14) fin, qui est fixé sur une dent et sur lequel les échantillons de teintes (12) sont solidement fixés, où les échantillons de teintes (12) sont composés de matériau de restauration, et où la surface totale du teintier (10) est inférieure à la surface buccale ou labiale, c'est-à-dire la surface vestibulaire (26) de

2. Teintier dentaire selon l'une des revendications précédentes, **caractérisé en ce que** le teintier (10) présente au moins quatre en particulier seize échantillons de teintes dentaires différentes et connues (12).

3. Teintier dentaire selon l'une des revendications précédentes, **caractérisé en ce que** l'échantillon de teintes (12) est attaché au teintier (10) séparé par des lignes de démarcation, en particulier des nervures de séparation.

4. Teintier dentaire selon l'une des revendications précédentes, **caractérisé en ce que** l'échantillon de teintes (12) du teintier (10) sont construits à partir de matériel de restauration teinté correspondant à la couleur de la dent.

5. Teintier dentaire selon l'une des revendications précédentes, **caractérisé en ce que** les échantillons de teintes (12) du teintier (10) présentent des tons et des opacités différentes.

6. Teintier dentaire selon l'une des revendications précédentes, **caractérisé en ce que** les échantillons de teintes (12) du teintier (10) correspondent à des teintes dentaires similaires d'un ton.

7. Teintier dentaire selon la revendication 1 ou 2, **caractérisé en ce que** le teintier (10) présente au moins un échantillon de teintes (12), qui correspondant à une teinte de blanchiment (16) et/ou une teinte de gencive.

8. Teintier dentaire selon l'une, des revendications précédentes, **caractérisé en ce que** le teintier (10) peut être fixé ou disposé dans la zone périphérique d'une dent que l'on veut analyser.

9. Teintier dentaire selon l'une des revendications précédentes, **caractérisé en ce que** le teintier (10) fait partie d'un écarteur, qui interagit en particulier avec un appareil photo.

10. Teintier dentaire selon l'une des revendications précédentes, **caractérisé en ce que** le teintier (10) et la surface buccale ou labiale (26) de la dent à analyser s'étendent principalement dans le même plan.

11. Teintier dentaire selon l'une des revendications précédentes, **caractérisé en ce que** le teintier peut être fixé de manière amovible - en particulier de façon mécanique ou adhésive - sur au moins une dent ou entre au moins deux dents du maxillaire supérieur et inférieur.

12. Teintier dentaire selon l'une des revendications précédentes, **caractérisé en ce que** le teintier (10) présente une épaisseur de 0,01 mm à 6 mm et en particulier est formé comme film imprimé (44), ledit film (44) étant particulièrement de préférence muni d'un adhésif qui est amovible sans résidus de la surface d'une dent.

13. Teintier dentaire selon l'une des revendications précédentes, **caractérisé en ce qu'**au moins les échantillons de teintes (12), sont fabriqués au moins partiellement en céramique et / ou en un matériau dentaire composite.

14. Teintier dentaire selon l'une des revendications précédentes, **caractérisé en ce que** les échantillons de teintes (12) fondent continuellement les uns dans les autres.

15. Teintier dentaire selon l'une des revendications 1 à 13, **caractérisé en ce que** les échantillons de teintes (12) ne fondent pas continuellement les uns dans les autres, mais sont présentés de façon discrète.
